**Europäisches Patentamt**

**European Patent Office**

**Office européen des brevets**

(19)

(11) Veröffentlichungsnummer: **0 051 147**
**B1**

(12)

# EUROPÄISCHE PATENTSCHRIFT

(45) Veröffentlichungstag der Patentschrift:
**18.04.84**

(51) Int. Cl.³: **C 09 C 1/56,** B 01 J 15/00

(21) Anmeldenummer: **81107633.0**

(22) Anmeldetag: **25.09.81**

(54) **Verfahren zur oxidativen Nachbehandlung von Russ.**

(30) Priorität: **03.11.80 DE 3041188**

(43) Veröffentlichungstag der Anmeldung:
**12.05.82 Patentblatt 82/19**

(45) Bekanntmachung des Hinweises auf die Patenterteilung:
**18.04.84 Patentblatt 84/16**

(84) Benannte Vertragsstaaten:
**BE DE FR GB IT NL**

(56) Entgegenhaltungen:
**DE - A - 1 592 840**
**DE - C - 661 401**
**FR - A - 1 195 792**

(73) Patentinhaber: **Degussa Aktiengesellschaft,**
**Weissfrauenstrasse 9, D-6000 Frankfurt am Main 1 (DE)**

(72) Erfinder: **Rothbühr, Lothar, Dr., Volkerstrasse 10,**
**D-5030 Hürth (DE)**

Verfahren zur oxidativen Nachbehandlung von Russ

Die Erfindung betrifft ein Verfahren zur Nachbehandlung von pulverförmigem Russ mit gasförmigem, dampfförmigem oder aerosolartigem Oxidationsmittel. Russ ist das wichtigste industriell hergestellte Schwarzpigment. Er wird sowohl als Verstärker in Elastomeren als auch als färbendes Schwarzpigment in vielen Systemen eingesetzt. Besonders hervorzuheben sind hierbei die Kunststoffe, im weitesten Sinne die Lacke und Anstrichstoffe, die Druckfarben sowie der Einsatz in Zementmischungen, Papier und Pappe. Während in Kunststoffen vorzugsweise normale Gasrusse oder Furnacerusse eingesetzt werden, sind die Verhältnisse in Lacksystemen und Druckfarbensystemen schwieriger. Dies ist dadurch bedingt, dass die Bindemittel für Lacke und Druckfarben häufig einen polaren Charakter haben. In diese polaren Bindemittel passen die an sich unpolaren Russe nicht gut hinein. Unpolare Russe dispergieren sich relativ schlecht in polaren Bindemitteln.

Um diese Schwierigkeiten zu überwinden, hat man sich dadurch geholfen, dass normaler Russ einer oxidativen Nachbehandlung unterworfen wird und so die an sich unpolare Russoberfläche in eine teilweise polare Oberfläche umgewandelt wird.

Ein bekanntes Verfahren zur Oxidation von Russ wird in DE-AS 15 92 840 beschrieben. Hier wird in einem liegenden rotierenden Rohr kontinuierlich Salpetersäure oder Stickoxid auf einen Russstrom aufgesprüht und anschliessend in einer zweiten Zone durch Überleiten von Luft die überschüssige Säure wieder entfernt. Diese Methode ist geeignet für die Oxidation von perlförmigem Russ. Wenn hier ungeperlter Russ verwendet würde, verperlte sich der Russ beim Drehen des Rohres. Jedenfalls würde er sich verdichten. Dies ist ein grosser Nachteil, wenn leicht dispergierbarer nachoxidierter Pulverruss hergestellt werden soll. Hierfür ist dieses Verfahren wenig geeignet. Ein weiterer Nachteil besteht darin, dass das Oxidationsmittel, soweit es sich in dem Gasstrom befindet, über den am Boden des Rohres liegenden Russ hinwegstreicht und so keinen sehr innigen Kontakt mit dem Russ hat. Selbst der Einbau von Wendelblechen etc. kann nicht zu einem idealen Kontakt führen. Auch kann das Rohr nur zum Teil mit Russ gefüllt werden.

Das Verfahren nach DE-PS 11 96 808 arbeitet dagegen mit Luft als Oxidationsmittel und Stickoxid als Katalysator, wobei Luft das Oxidationsmittel und der mechanische Träger für den Russ ist. Es werden Oxidationstemperaturen von 150–230°C benutzt.

Gesucht wird eine Arbeitsweise, die eine möglichst geringe Gesamtoxidation erreicht, jedoch eine sehr dünne, gleichmässig über die Oberfläche verteilte Oxidationshaut erreicht. Dieses Ziel kann mit dem Verfahren von DE-PS 11 96 808, bei dem eine zu starke Oxidation auftritt, nicht erreicht werden, weil die Oberfläche des Russes nicht restlos bedeckt ist, sondern Poren entstehen.

Eine porenfreie Oxidationshaut kann nur in einer Atmosphäre von reinem Oxidationsmittel und bei niedriger Oxidationstemperatur entstehen.

Ein Ziel war es deshalb, ein Verfahren zu entwickeln, das einen sehr innigen Kontakt von Russ mit einem Oxidationsmittel bei Oxidationstemperaturen unter 150°C erlaubt, kein Tragmedium wie Luft benötigt und trotz des innigen Kontaktes des festen Russes mit dem gasförmigen oder dampfförmigen Oxidationsmittel keine Verdichtung oder Perlung des Russes bewirkt. Das Verfahren sollte auch bei extremen Russqualitäten, die durch niedrige Struktur eine starke Klebewirkung aufweisen, voll wirksam bleiben. Ein weiteres Ziel war, ein Verfahren zu entwickeln, bei dem der Russ in grösserer Menge behandelt werden kann, wodurch eine gute Effektivität gesichert wird.

Gelöst wurden diese Aufgaben durch ein Verfahren zur Nachbehandlung von pulverförmigem Russ mit gasförmigem, dampfförmigem oder aerosolartigem Oxidationsmittel, welches dadurch gekennzeichnet ist, dass der Russ in einem vertikalen zylindrischen Reaktor, in dessen Mittelachse eine mit über die Zylinderhöhe etagenförmig versetzten, den gesamten Zylinderquerschnitt in überwiegend horizontaler Anstellung bestreichenden Rührarmen ausgerüstete Welle mit einer Geschwindigkeit der Rührarmspitzen zwischen 0,2 und 2,0 m/sec. rotiert, vom untersten Teil des Reaktors aus mit dem Oxidationsmittel durchströmt wird, wobei die Menge des Oxidationsmittelstroms so bemessen wird, dass die Reaktionstemperatur unterhalb 150°C bleibt, dass der Russ nach Erreichen des gewünschten Oxidationsgrades unter Aufrechterhaltung der genannten langsamen Rührbewegung mit Luft frei von Oxidationsmittel geblasen und anschliessend aus dem Reaktor abgelassen wird.

Aus der FR-PS 1 195 792 war auch schon ein Verfahren zum oxidativen Nachbehandeln von trockenem Russ mit einem Luft/Stickstoffdioxid-Gemisch bei 150 bis 230°C bekannt, wobei der Russ der Einwirkung eines ihn in Suspension haltenden Luftstroms, dem Stickstoffdioxid zugesetzt wird, unterworfen wird.

Dieses Verfahren eignet sich beispielsweise jedoch nicht, Russ mit hohem Schüttgewicht und niedriger Struktur zu oxidieren, weil solche Russe klebrig sind und durch einen Luftstrom nicht genügend getragen werden. Ferner wird bei diesem Verfahren das Behandlungsgut nur ungleichförmig oxidiert und die Gefahr einer Entflammung ist nicht vollends auszuschliessen. Hinzu kommt, dass das bekannte Verfahren bei Temperaturen arbeitet, bei denen bereits eine Porenbildung auftritt, die beim erfindungsgemässen Verfahren unterbleiben soll.

Demgegenüber erlaubt das erfindungsgemässe Verfahren ein gefahrloses Arbeiten mit reinem oder hochkonzentriertem Oxidationsmittel sowie die Gewinnung von Russen mit praktisch porenfreier Oberfläche.

Weiterhin war aus der DE-PS 661 401 eine Oxidationsmethode bekannt, in der der zu oxidierende Feststoff mit einem von unten eingeblasenen ozonisierten Luftstrom aufgewirbelt werden muss.

Erfindungsgemäss erfolgt kein Einblasen eines scharfen Gasstrahls in das Behandlungsgut, um dieses zu fluidisieren. Statt dessen wird der Russ durch die relativ langsame Bewegung der Rührarme der verwendeten Vorrichtung in eine aufgelockerte Masse überführt, die mit dem konzentrierten Oxidationsmittel behandelt werden kann.

Schliesslich war noch aus der US-PS 3 676 365 eine Vorrichtung für einen gänzlich anderen Verwendungszweck, nämlich dem Carbonisieren und Aktivieren von Cellulosematerial, bekannt, deren Aufbau mit der zur Ausführung des erfindungsgemässen Verfahrens verwendeten Apparatur weitgehend übereinstimmt. Wegen der andersartigen Zweckbestimmung (Erzeugung poröser Aktivkohlen von 0,5–5 mm Korngrösse mittels eines Wasserdampf-haltigen neutralen Gases bei Temperaturen von 400–1000°C unter Ausbildung eines [gerührten] Wirbelbettes) konnte jedoch der Einsatz einer entsprechenden Vorrichtung für die Lösung der Aufgabe der vorliegenden Erfindung nicht naheliegend sein.

Im Rahmen des erfindungsgemässen Verfahrens sind eine Reine vorteilhafter Abwandlungen möglich.

So kann das Oxidationsmittel bzw. die Spülluft auf mehrere, vorzugsweise 4 bis 6, Ströme aufgeteilt werden, die tangential in dem untersten Teil des vertikalen Zylinders münden.

Als günstig hat es sich auch erwiesen, dass das Verhältnis zwischen Höhe des Zylinders und Durchmesser des Zylinders zwischen 2:1 bis 5:1, vorzugsweise zwischen 3:1 und 4:1 liegt.

Eine bereits im praktischen Betrieb bewährte Ausführungsform sieht vor, dass in dem Reaktor 8–16 Etagen mit Rührarmen angebracht sind, wobei die aufeinanderfolgenden Etagen um 45–90° gegeneinander versetzt sind.

Besonders vorteilhaft hat sich ferner erwiesen, dass die Geschwindigkeit an der Spitze der Rührarme zwischen 0,2 und 2,0 m/sec., vorzugsweise zwischen 0,5 und 1,0 m/sec. liegt, dass der Reaktor zu etwa 85% seines Volumens mit dem Russ befüllt wird und dass der Russ 2–6 Stunden unter einem Temperaturanstieg bis etwa 110–150°C oxidiert wird.

Ein weiterer Gegenstand der Erfindung ist die Verwendung des nach den erfindungsgemässen Massnahmen erhältlichen Russes für Lack- und Druckfarbensysteme.

Die Erfindung wird im folgenden anhand der beiliegenden Zeichnung weiter erläutert. In der Zeichnung zeigen

Fig. 1 einen Vertikalschnitt durch eine Ausführungsform der zur Durchführung des erfindungsgemässen Verfahrens verwendbaren Vorrichtung und

Fig. 2 einen Horizontalschnitt durch eine solche Vorrichtung mit einer bevorzugten Zuleitungsart für das Oxidationsmittel.

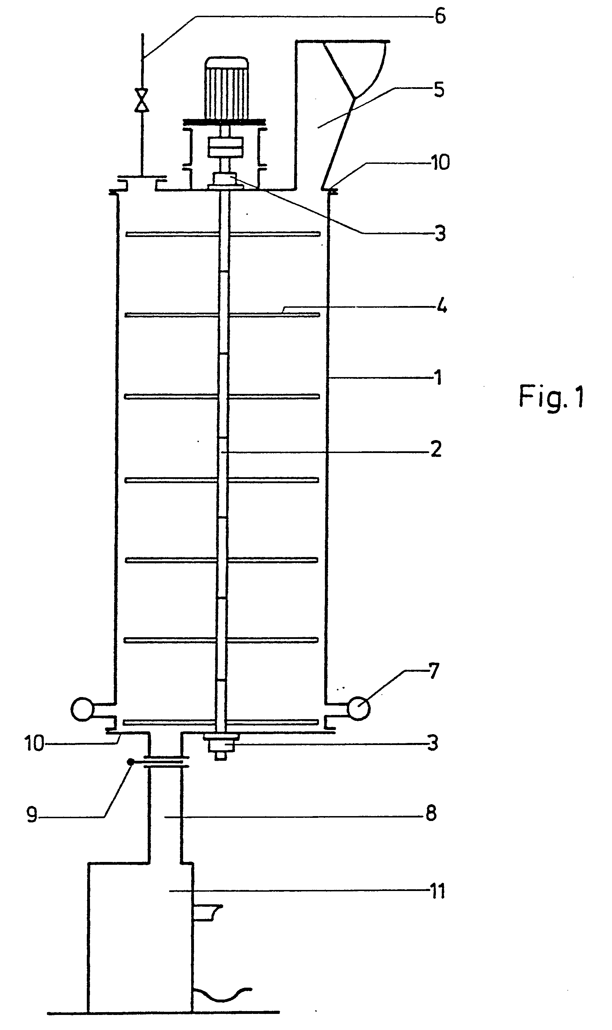

Gemäss Figur 1 besteht die Vorrichtung aus einem stehenden, geschlossenen Zylinder 1, der je eine obere und eine untere Abdeckplatte 10 besitzt. In die Abdeckplatten sind jeweils zentrisch oben und unten Lager 3 eingebaut, durch die eine durch die Gesamtlänge des Zylinders geführte Welle 2 hindurchragt. An dieser zentralen Welle sind etagenartig Rührarme 4 befestigt, die gegeneinander versetzt sind. Weiterhin besitzt der Zylinder eine Befüllöffnung für Russ 5 sowie eine Auslassöffnung für Russ 8, die durch einen Schieber 9 verschlossen werden kann. Der fertige Russ kann durch die Absackeinrichtung 11 abgepackt werden. Für den Abzug von überschüssigen Gasen dient die Abgasleitung 6. Das Oxidationsmittel und später die Ausblasluft wird durch die Zuleitungen 7 in den Zylinder eingeführt.

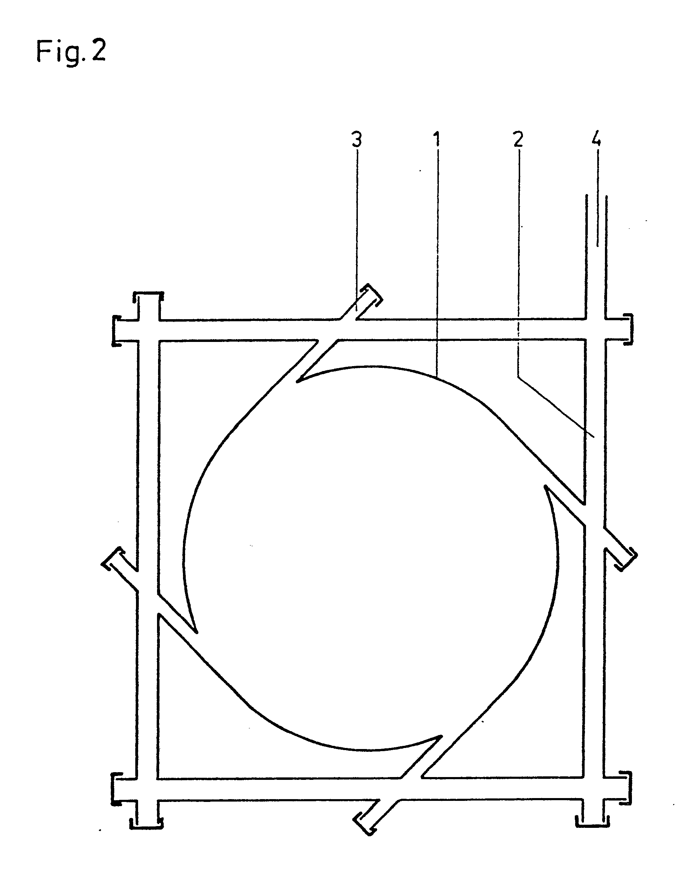

Die bevorzugte Form der Zuleitung von Oxidationsmittel wird in Figur 2 näher gezeigt. Das Oxidationsmittel kommt aus der Richtung 4 und erfüllt den Verteiler 2, der sich rings um den Zylinder 1 erstreckt. Ausgehend von dem Verteiler wird das Oxidationsmittel dann durch die Röhrchen 3 tangential in den untersten Bereich des Zylinders eingeführt.

Das Arbeiten mit der beschriebenen Vorrichtung wird im wesentlichen wie folgt durchgeführt:

Durch die Befüllöffnung 5 wird pulverförmiger Russ bei bereits laufender Welle in den stehenden Zylinder eingefüllt. Die Einfüllung wird so lange fortgesetzt, bis ca. 85% des Volumens erfüllt sind. Die restlichen 15% des Volumens werden als Sicherheitsvolumen angesehen, das bei der eigentlichen Oxidationsreaktion als erforderlich erachtet wird. Nun wird durch die Zuleitung 7 ein gasförmiges, dampfförmiges oder aerosolförmiges Oxidationsmittel zugeführt und die im stehenden Zylinder vorhandene Luft verdrängt. Die Zugabe von Oxidationsmittel wird noch für eine gewünschte Zeit weitergeführt. Vorzugsweise werden die eigentlichen Oxidationszeiten auf 2–6 Stunden begrenzt. Durch die Zugabe des Oxidationsmittels steigt die Temperatur auf 110–150°C.

Anschliessend wird durch die Zuleitung 7 Spülluft in den stehenden Zylinder gepresst, die das Oxidationsmittel verdrängen soll. Nach Erreichen der gewünschten Freiheit von Oxidationsmittel (vorzugsweise Freiheit von Säureresten) kann die Spülluftzugabe beendet und der fertige, oxidierte Russ durch die Auslassöffnung 8 abgelassen und abgepackt werden. Während der gesamten Oxidationsmittelzugabe und Spülluftzugabe bewegt sich die Welle des senkrechten Zylinders mit den daran befestigten Rührarmen mit einer Geschwindigkeit, die den Russ zwar wie eine Flüssigkeit in Bewegung hält, jedoch keine Verdichtung oder Perlung bewirkt. Die aus dem Behälter verdrängten Gase können durch die Leitung 6 abgeleitet werden.

Die Arbeitsweise bei der Durchführung des erfindungsgemässen Verfahrens mit der beschriebenen Vorrichtung soll an einigen Beispielen erläutert werden.

Beispiel 1

Ein stehender Zylinder mit einem Durchmesser von 1400 mm und einer Höhe von 4500 mm besitzt eine Deckplatte und eine Bodenplatte. Sowohl an der Deckplatte als auch an der Bodenplatte sind Lager angebaut, die eine zentrisch im Zylinder angebrachte Welle tragen. Die Welle ihrerseits trägt 11 Paare von Rührarmen, die in den einzelnen Etagen um 90° zueinander versetzt sind. Die horizontale Ausdehnung der Rührarme reicht praktisch bis an die Wand, es wird nur so viel Abstand gelassen, dass kein Wandkontakt erfolgen kann. Die Welle in dem Zylinder wird mit einer Geschwindigkeit von 6 UpM von einem Motor am Kopf der Welle in Bewegung gesetzt.

Bei laufenden Rührarmen wird durch eine an der Deckplatte angeordnete Füllöffnung eine Menge von 1200 kg pulverförmigem Russ in den Zylinder gegeben. Der Russ hat folgende Eigenschaften:

| Jodadsorption | nach DIN 53 582 | 119 mg/g |
|---|---|---|
| DBP-Absorption | nach DIN 53 601 | 47 ml/100 g |
| Farbstärke im Vergleich zu IRB 3 | nach DIN 53 234 | 116% |
| flüchtige Bestandteile bei 1 g Einwaage | nach DIN 53 522 | 1% |
| pH-Wert | nach DIN 53 200 | 10 |
| Acidität | | $0 \text{ ml} \frac{n}{10}$ KOH pro 100 g Russ |
| Schüttdichte | nach DIN 53 194 | 240 g/l |

Aufgrund seiner niedrigen Struktur (DBP-Zahl) ist der Russ schwer und klebrig.

Der zylindrische Behälter ist im untersten Bereich mit einer ihn aussen umgebenden Versorgungseinrichtung versehen, aus der 4 Röhrchen tangential in das Behälterinnere führen. Aus dieser Einrichtung werden jetzt drei Stunden lang 10 kg/h Stickstoffdioxid zugegeben. Hierbei steigt die Temperatur bis auf 120°C an. Die verdrängten Gase haben die Möglichkeit, durch eine Abgasleitung an der Deckplatte des Behälters zu entweichen. Nach den drei Stunden Oxidationszeit beginnt das Ausblasen des überschüssigen Oxidationsmittels. Hierzu wird durch die vorstehend beschriebene Einrichtung mit den 4 tangentialen Rohren 7 $Nm^3$/h Luft geblasen. Nach 20 Stunden ist dieser Vorgang beendet und der Russ auf 35°C abgekühlt. Der Russ wird jetzt durch eine Ableitung an der Bodenplatte des Behälters abgelassen und abgepackt. Er weist folgende Eigenschaftsmerkmale auf:

| Jodadsorption | nach DIN 53 582 | 101 mg/g |
|---|---|---|
| DBP-Absorption | nach DIN 53 601 | 45 ml/100 g |
| Farbstärke im Vergleich zu IRB 3 | nach DIN 53 234 | 122% |
| flüchtige Bestandteile bei 1 g Einwaage | nach DIN 53 522 | 5% |
| pH-Wert | nach DIN 53 200 | 4,8 |
| Acidität | | $2,0 \text{ ml} \frac{n}{10}$ KOH pro 100 g Russ |
| Schüttdichte | nach DIN 53 194 | 220 g/l |

Die Oxidation der Russoberfläche ist an einem Ansteigen der Farbstärke, der flüchtigen Bestandteile, der Acidität und einem Absinken des pH-Wertes zu erkennen. Für die überraschend günstige Funktion der verwendeten Vorrichtung spricht die Tatsache, dass trotz der klebenden, leicht zur Verdichtung neigenden Eigenschaften des Ausgangsproduktes das Fertigprodukt eine niedrigere Schüttdichte aufweist als das Ausgangsprodukt.

Beispiel 2

In einem Zylinder, der einen Durchmesser von 400 mm und eine Höhe von 1000 mm aufweist, wird eine oben und unten gelagerte Welle mit einer Drehzeit von 10 UpM betrieben. An der Welle sind 7 Doppelrührarme befestigt, die in den einzelnen Etagen um 45° gegeneinander versetzt sind. Bei laufenden Rührarmen wird von der Decke des Zylinders her eine Menge von 10 kg eines pulverförmigen Russes mit folgenden Eigenschaften eingefüllt:

| | |
|---|---|
| Jodadsorption | 180 mg/g |
| DBP-Absorption | 44 ml/100 g |
| Farbstärke | |
|    bez. auf IRB 3 | 119% |
| flüchtige Bestandteile | 1,5% |
| pH-Wert | 9,5 |
| Acidität | $0 \, ml \, \frac{n}{10} KOH$ |
| | pro 100 g Russ |
| Schüttdichte | 210 g/l |

Der zylindrische Behälter wird nun für die Dauer von zwei Stunden durch Einblasen von 0,5 kg $NO_2$/h über 2 tangential in der Nähe der Bodenplatte angebrachte Röhrchen beschickt. Hierbei steigt die Reaktionstemperatur auf 145°C an. Nach den zwei Stunden wird der Oxidationsvorgang abgeschlossen und nun das überschüssige Oxidationsmittel durch Einblasen von 3 Nm³/h Luft über die Dauer von 5 Stunden verdrängt. Nach Abschluss dieses Vorgangs wird der oxidierte Russ durch Öffnen eines Schiebers am Boden des Behälters abgelassen. Der dabei gewonnene Russ hat folgende Eigenschaften:

| | |
|---|---|
| Jodadsorption | 115 mg/g |
| DBP-Absorption | 42 ml/100 g |
| Farbstärke | |
|    bez. auf IRB 3 | 125% |
| flüchtige Bestandteile | 7,5% |
| pH-Wert | 4,5 |
| Acidität | $6,2 \, ml \, \frac{n}{10} KOH$ |
| | pro 100 g Russ |
| Schüttdichte | 180 g/l |

Auch aus diesem Beispiel ist durch den Vergleich der eingesetzten und erhaltenen Russqualitäten leicht die oxidative Veränderung der Russoberfläche zu erkennen. Dieser Russ ist ebenfalls als stark klebender und leicht zur Verdichtung neigender Russ zu bezeichnen.

Trotzdem kann er der Vorrichtung mit einer Schüttdichte entnommen werden, die niedriger ist als diejenige des Ausgangsmaterials und dies gefahrlos! Bei anderen bekannten Verfahren zur Russoxidation kann demgegenüber bei stark klebenden Russen auch bei der Entnahme des fertig oxidierten Russes Funken- oder Brandbildung auftreten, weil daraus das Oxidationsmittel nicht ausreichend entfernt werden kann. Solche Gefahren sind bei erfindungsgemässem Arbeiten vollkommen ausgeschlossen.

**Patentansprüche**

1. Verfahren zur Nachbehandlung von pulverförmigem Russ mit gasförmigem, dampfförmigem oder aerosolartigem Oxidationsmittel, dadurch gekennzeichnet, dass der Russ in einem vertikalen zylindrischen Reaktor, in dessen Mittelachse eine mit über die Zylinderhöhe etagenförmig versetzten, den gesamten Zylinderquerschnitt in überwiegend horizontaler Anstellung bestreichenden Rührarmen ausgerüstete Welle mit einer Geschwindigkeit der Rührarmspitzen zwischen 0,2 und 2,0 m/sec. rotiert, vom untersten Teil des Reaktors aus mit dem Oxidationsmittel durchströmt wird, wobei die Menge des Oxidationsmittelstroms so bemessen wird, dass die Reaktionstemperatur unterhalb 150°C bleibt, dass der Russ nach Erreichen des gewünschten Oxidationsgrades unter Aufrechterhaltung der genannten langsamen Rührbewegung mit Luft frei von Oxidationsmittel geblasen und anschliessend aus dem Reaktor abgelassen wird.

2. Verfahren nach Anspruch 1, dadurch gekennzeichnet, dass das Oxidationsmittel bzw. die Spülluft auf mehrere, vorzugsweise 4–6 Ströme aufgeteilt wird, welche tangential in dem untersten Teil des vertikalen Zylinders münden.

3. Verfahren nach Anspruch 1 oder 2, dadurch gekennzeichnet, dass das Verhältnis zwischen Höhe des Zylinders und Durchmesser des Zylinders zwischen 2:1 bis 5:1, vorzugsweise zwischen 3:1 und 4:1, liegt.

4. Verfahren nach den Ansprüchen 1–3, dadurch gekennzeichnet, dass in dem Reaktor 8–16 Etagen mit Rührarmen angebracht sind.

5. Verfahren nach Anspruch 4, dadurch gekennzeichnet, dass die aufeinanderfolgenden Etagen um 45–90° gegeneinander versetzt sind.

6. Verfahren nach den Ansprüchen 1–5, dadurch gekennzeichnet, dass die Geschwindigkeit an der Spitze der Rührarme zwischen 0,5 und 1,0 m/sec. liegt.

7. Verfahren nach den Ansprüchen 1–6, dadurch gekennzeichnet, dass der Reaktor zu etwa 85% seines Volumens mit dem Russ befüllt wird.

8. Verfahren nach den Ansprüchen 1–7, dadurch gekennzeichnet, dass der Russ 2–6 Stunden unter einem Temperaturanstieg bis etwa 110–150°C oxidiert wird.

9. Verwendung des nach vorstehenden Massnahmen erhältlichen Russes für Lack- und Druckfarbensysteme.

**Claims**

1. A process for the aftertreatment of carbon black in powder form with a gaseous, vaporous or aerosol-like oxidizing agent, characterised in that the oxidizing agent flows through the carbon black from the lowest point of a vertical cylindrical reactor, the reactor having a shaft equipped with agitators which are displaced in the form of tiers over the extent of the cylinder and cover the entire cross section of the cylinder in a substantially horizontal position, the shaft rotating in the central axis of the reactor and the tips of said agitators rotating at a speed of from 0.2 to 2.0 m/sec, the amount of the flow of oxidizing agent being calculated in such a way that the reaction temperature does not exceed 150°C, and after the carbon black has attained the desired degree of oxidation, it is blown with air free of oxidizing agent, while the above-mentioned slow agitation movement is continued, and the carbon black is finally drawn out of the reactor.

2. A process according to claim 1, characterised in that the oxidizing agent or scavenging air is divided into several, preferably from 4 to 6, currents which enter the lowest part of the vertical cylinder in a tangential manner.

3. A process according to claim 1 or 2, characterised in that the ratio of the cylinder height to the cylinder diameter is from 2:1 to 5:1, preferably from 3:1 to 4:1.

4. A process according to claims 1 to 3, characterised in that from 8 to 16 tiers fitted with agitators are positioned in the reactor.

5. A process according to claim 4, characterised in that the successive tiers are displaced by 45 to 90° with respect to each other.

6. A process according to claims 1 to 5, characterised in that the speed of the tips of the agitators is from 0.5 to 1.0 m/sec.

7. A process according to claims 1 to 6, characterised in that the reactor is filled to about 85% of its volume with carbon black.

8. A process according to claims 1 to 7, characterised in that the carbon black is oxidized for 2 to 6 hours while the temperature rises to about 110–150°C.

9. The use of the carbon black which is obtainable by the means referred to above, for lacquer- and printing ink systems.

## Revendications

1. Procédé de traitement d'un noir de carbone pulvérulent avec un agent oxydant sous forme de gaz, de vapeur ou d'aérosol, caractérisé en ce que le noir de carbone est placé dans un réacteur cylindrique vertical dans l'axe central duquel est monté un arbre muni sur toute la hauteur du cylindre, de bras d'agitation décalés, en étages, balayant toute la section du cylindre en une position essentiellement horizontale, l'arbre tournant en donnant à la pointe des bras d'agitation une vitesse comprise entre 0,2 et 2 m/sec, le noir de carbone étant parcouru l'agent oxydant depuis la partie inférieure du réacteur, le débit de l'agent oxydant étant déterminé de façon que la température reste en dessous de 150°C, et que le noir de carbone, après avoir atteint le degré d'oxydation souhaité, soit balayé par de l'air exempt d'agent oxydant, tout en maintenant le lent mouvement d'agitation mentionné, et est ensuite évacué du réacteur.

2. Procédé selon la revendication 1, caractérisé en ce que l'agent oxydant ou l'air de balayage sont divisés en plusieurs, notamment quatre à six courants qui débouchent tangentiellement dans la partie inférieure du cylindre vertical.

3. Procédé selon l'une des revendications 1 et 2, caractérisé en ce que le rapport entre la hauteur du cylindre et son diamètre est compris entre 2:1 et 5:1, et notamment entre 3:1 et 4:1.

4. Procédé selon l'une quelconque des revendications 1 à 3, caractérisé en ce que le réacteur comporte de 8 à 16 étages de bras d'agitation.

5. Procédé selon la revendication 4, caractérisé en ce que les étages successifs sont décalés de 45 à 90° les uns par rapport aux autres.

6. Procédé selon l'une quelconque des revendications 1 à 5, caractérisé en ce que la vitesse à la pointe des bras d'agitation est compris entre 0,5 et 1 m/sec.

7. Procédé selon l'une quelconque des revendications 1 à 6, caractérisé en ce que le réacteur est rempli de noir de carbone jusqu'à environ 85% de son volume.

8. Procédé selon l'une quelconque des revendications 1 à 7, caractérisé en ce que le noir de carbone est oxydé pendant 2 à 6 heures, la température montant à environ 110–150°C.

9. Utilisation du noir de carbone obtenu par le procédé selon l'une quelconque des revendications 1 à 8, dans des compositions de vernis et encres d'imprimerie.

Fig.1

Fig. 2